# EUROPÄISCHE PATENTSCHRIFT

(11) **EP 1 890 798 B1**
(45) Veröffentlichungstag und Bekanntmachung des Hinweises auf die Patenterteilung: **25.02.2009**
(21) Anmeldenummer: 06755304.0
(22) Anmeldetag: 24.05.2006
(51) Int. Cl.: B01F 7/04, C03C 1/02

(54) **ETIKETTENENTFERNER FÜR ALTGLAS**
WASTE GLASS LABEL REMOVER
DISPOSITIF POUR ELIMINER LES ETIQUETTES SUR DU VERRE USAGE

(30) Priorität: 25.05.2005 AT 8932005
(43) Veröffentlichungstag der Anmeldung: 27.02.2008
(73) Patentinhaber: BINDER + CO. AKTIEGESELLSCHAFT, A-8200 Gleisdorf (AT)
(72) Erfinder: FREYDL, Diego, A-8570 Voitsberg (AT); MAKARI, Christian, A-8045 Graz (AT); NEUHOLD, Robert, A-8200 Gleisdorf (AT)
(74) Vertreter: KLIMENT & HENHAPEL
(86) Internationale Anmeldenummer: PCT/EP2006/062616
(87) Internationale Veröffentlichungsnummer: WO 2006/125814

(56) Entgegenhaltungen:
- EP-A- 0 677 323
- EP-A- 0 786 288
- DE-U1- 20 308 984
- GB-A- 1 039 682
- GB-A- 2 210 281
- PATENT ABSTRACTS OF JAPAN Bd. 1998, Nr. 09, 31. Juli 1998 (1998-07-31) & JP 10 100061 A (OKINAWA KARETSUTO CENTER:KK), 21. April 1998 (1998-04-21)

## Beschreibung

### GEBIET DER ERFINDUNG

Die Erfindung bezieht sich auf die Verwendung einer Vorrichtung mit in einem Gehäuse rotierbaren Schaufeln, die an lediglich einer einzelnen rotierend antreibbaren Welle angeordnet sind und wobei die Endbereiche der Schaufeln in einem Mindestabstand zum Gehäuse enden, um im befüllten Zustand des Gehäuses die Ausbildung einer zufolge der Wellenrotation fortwährend mittels radialer Kraftkomponenten druckbeaufschlagten Altglas- bzw. Glasbruchschicht zwischen den Endbereichen der Schaufeln und Seitenwänden des Gehäuses sowie einem Boden des Gehäuses zu ermöglichen gemäß dem Oberbegriff des Anspruchs 1.

Zur Bereitstellung und Aufwertung von wiederverwertbarem Altglas bedarf es eines Abscheideprozesses, in welchem Materialien aus Glas von anderen im geförderten Materialstrom befindlichen Materialien wie etwa Kunststoff, Keramik oder Metall mittels einer Erkennungsvorrichtung unterschieden und in der Folge voneinander separiert werden.

Die Erkennung erfolgt dabei zumeist über eine Detektion, basierend auf Opazität der Reflexion oder Strahlungsdurchlässigkeit der zugeführten Objekte, aufgrund derer dann ein Ausblasen über Düsen oder ein sonstiges mechanisches Beseitigen der unerwünschten Materialien in dafür vorgesehene Behälter eingeleitet wird.

Als problematisch erweist sich dabei jedoch die Tatsache, dass der Erkennungsmechanismus oftmals durch auf den Glasobjekten befindliche Etiketten, Beschichtungen oder Verschmutzung bezüglich der wahren Natur des vorliegenden Materials irregeführt wird. Auf diese Weise werden vielfach zur Wiederverwertung taugliche Glasscherben fälschlicherweise als Kunststoff oder anderer Feststoff identifiziert und aus dem Prozess aussortiert, sodass sich eine hohe Übersortierung ergibt.

Aus diesem Grunde bedarf es zur eindeutigen Erkennung der Materialien eines vorgeschalteten Reinigungsvorganges, in welchem das Glas vor seiner Wiederverwertung einer gründlichen Reinigung unterzogen und von anhaftenden Etiketten, Beschichtungen und Verschmutzungen befreit wird.

### STAND DER TECHNIK

Herkömmliche Verfahren beinhalten zu diesem Zwecke einen Flüssig-Waschvorgang mit anschließender Trocknung, welcher jedoch sehr aufwändig und energieintensiv ist. Zur Lösung der oftmals zäh anhaftenden Etiketten bedarf es des Einsatzes entsprechend aggressiver Chemikalien und einer nachgeschalteten kostenintensiven Abwasseraufbereitung.

Ebenfalls bekannt sind alternative Verfahren, welche mit einer Verrottung der anhaftenden Etiketten arbeiten. Diese Anlagen, bei denen der Glasbruch in einem großen Bottich eingesumpft wird, sind jedoch nur bedingt wirksam und weisen einen hohen Platzbedarf auf.

Aus der JP 10-059740 ist eine Etikettenlösevorrichtung bekannt, die nach einem Trockenwaschverfahren arbeitet. Dabei sind zwei nebeneinander angeordnete, mit Schaufeln bestückte Wellen vorgesehen, welche in gegenläufiger Richtung zueinander rotieren. Die Schaufelreihen der beiden Wellen sind dabei so positioniert, dass sie während des Rotationsvorganges in den Umfangskreis der jeweils gegenüberliegenden Schaufeln hineingreifen und diesen in einem axialen Abstand gegenüberstehen. Auf diese Weise werden im Gehäuseraum Paare von gegeneinander angestellten Schaufelflächen gebildet, zwischen denen der Glasbruch befördert und gerieben wird. Der festgesetzte Abstand zwischen den gegengleichen Schaufelflächen der beiden Wellen beschreibt entlang der Wellenachsen einen Kanal, durch welchen der Glasbruch zu mehreren am Gehäuseboden vorgesehenen Entnahmeöffnungen geführt wird.

Durch diese Vorrichtung wird zwar eine Trockenwäsche von Glasbruch realisiert, jedoch erweist sich der aufgrund der gegengleich paarig angeordneten Schaufeln erzielte Abrieb am Glasbruch als ungenügend, da die einzelnen Glasbruchteile während einer 360°-Drehung der Welle vom sie reinigenden Schaufelprofil jeweils nur für verhältnismäßig kurze Zeit erfasst wird. Die Momente während des Materialdurchlaufes im Rotationsvorgang, in denen wirksame Kraft auf den Glasbruch ausgeübt wird und effektiver Abrieb von anhaftenden Etiketten und dergleichen stattfindet, sind also beschränkt. Als problematisch erweisen sich bei einer solchen Anlage mit paarig angeordneten Wellen auch mit dem Altglas eingebrachte metallische Gegenstände. Vor allem längliche Gegenstände aus Metall, welche in den Trockenwaschvorgang gelangen, können beim Erfassen durch die gegeneinander rotierenden Wellen die Schaufeln deformieren oder die gesamte Anlage blockieren und zum Stillstand bringen. Um diese Gefahr zu eliminieren, ist nach wie vor eine manuelle Vorkontrolle und Auslese des eingehenden Materialstroms erforderlich. Darüber hinaus stellt eine Anlage unter Einsatz von zwei Wellen eine kosten- und energieintensive Lösung zur Trockenwäsche von Altglas dar.

Aus der DE 103 08 500 A1 ist ebenfalls ein Verfahren bzw. eine Vorrichtung zur trockenen Etikettenentfernung bekannt, allerdings richtet sich diese lediglich auf schleuderndes Aufbereiten von Kunststoff Hohlkörpern mittels turbulenzerzeugenden Rotorwerkzeugen. Die thrombenartig innerhalb einer in der Gehäusetrommel erzeugten Windhose transportierten Kunststoff Hohlkörper werden hierbei jeweils über Rotorwerkzeuge mit einer Rotordrehzahl von 500 bis 2500 U/min kurz axial beschleunigt und prallen dabei in freiem Flug entweder an benachbarten profilierten Rotorwerkzeugen oder an den Wänden der Gehäusetrommel auf, welche mit Noppen oder siebförmigen Öffnungen versehen sind, um die an den Kanten dieser Profilelemente aufprallenden Kunststoff Hohlkörper oberflächlich anzureißen und solcherart ein Ablösen anhaftender Etiketten zu motivieren. Eine solche für Kunststoff Hohlkörper geeignete Etikettenentfernungsvorrichtung würde sich jedoch zur Aufbereitung eines Glasbruch-Materialstroms in keiner Weise eignen, da zufolge des angewandten "Beschleunigungs- und Prallprinzips" und der hohen Geschwindigkeits- und Durchsatzwerte der Anlage kein-Ablösen der Etiketten vom Glasbruch, sondern ein vollkommenes Zerschmettern bzw. Verschreddern des solcherart für eine angestrebte Weiterverwertung unbrauchbaren Glasbruch-materialstroms bewerkstelligt würde.

Aus der GB 1 039 682 A, der EP 0 786 288 A, der EP 0 677 323 A, der GB 2 210 281 A und der DE 203 08 984 U1 sind jeweils eine beschaufelte Welle aufweisende Vorrichtungen bekannt, die zum Mischen von Beton, Tierfutter und Zementmörtel sowie zum Granulieren von Schlämmen,

### DARSTELLUNG DER ERFINDUNG

Der vorliegenden Erfindung liegt daher die Aufgabe zugrunde, eine effiziente, betriebsichere Vorrichtung zur Trockenwäsche von Altglas bzw. Glasbruch bereitzustellen, durch welche ein gründlicher und vollständiger Abrieb von am Glasbruch anhaftenden Materialien und Verunreinigungen gewährleistet wird, eine Vor- und Nachkontrolle, des Materialstroms vollkommen entfällt und die gegenüber bekannten Vorrichtungen energiesparender ist.

Diese Aufgabe wird durch die Verwendung einer Vorrichtung mit in einem Gehäuse rotierbaren Schaufeln, die an lediglich einer einzelnen rotierend antreibbaren Welle angeordnet sind und wobei die Endbereiche der Schaufeln in einem Mindestabstand zum Gehäuse enden, um im befüllten Zustand des Gehäuses die Ausbildung einer zufolge der Wellenrotation fortwährend mittels radialer Kraftkomponenten druckbeaufschlagten Altglas- bzw. Glasbruchschicht zwischen den Endbereichen der Schaufeln und Seitenwänden des Gehäuses sowie einem Boden des Gehäuses zu ermöglichen, zur Trockenwäsche von Altglas bzw. Glasbruch mit scherender Durchmischung und Abrasion des Altglases bzw. Glasbruches aufgrund von durch die Schaufelrotation ausgeübten Scher- und Druckkräften.

Die Verwendung der beschriebenen Vorrichtung zur Trockenwäsche von Altglas und Glasbruch kann sich im befüllten Zustand des Gehäuses zwischen den Endbereichen der Schaufeln und Seitenwänden des Gehäuses sowie einem Boden des Gehäuses ein Materialpolster aus Altglas bzw. Glasbruch ausbilden, welcher zufolge der Wellenrotation fortwährend mittels radialer Kraftkomponenten druckbeaufschlagt ist. In diesem Materialpolster wird durch das Zusammenspiel von Schaufeln und Gehäusewänden die Umwälzung und der Transport des eingebrachten Glasbruches ermöglicht. Gleichzeitig bewirken die eingebrachten Scherkräfte einen intensiven Abrieb am Glasbruch. Die Einbeziehung der Gehäusewand und des Gehäusebodens als Reibfläche erhöht die Scherwirkung gegenüber bekannten Trockenwaschanlagen signifikant. Das kennzeichnende Merkmal des Anspruchs 10 sieht diesbezüglich vor, dass der Mindestabstand der Schaufelendbereiche zum Gehäuse 5 cm beträgt.

Die gezielte Kraftausübung gegen eine Gehäusewand ermöglicht einen wirkungsvolleren und gründlicheren Abrieb von Etiketten und Schmutz als bei Anlagen nach dem Stand der Technik und erlaubt eine einfachere Konstruktion. Ein weiterer Vorteil ist darüber hinaus die Robustheit der Anlage, da aufgrund der Tatsache, dass im zur Trockenwäsche bereitgestellten Glasbruch immer wieder unerwünschte Metallgegenstände wie Kleiderbügelteile oder dergleichen enthalten sind, auch in dieser Hinsicht erhöhte Anforderungen bestehen.

Gemäß den kennzeichnenden Merkmalen des Anspruchs 2 weisen die Schaufeln jeweils einen flächenartigen Endbereich auf, dessen Schnittlinie mit einer zur Wellenachse normal verlaufenden Ebene mit einer gedachten Tangente an die Rotationsbahn des jeweiligen Endbereichs einen Winkel α < 90° einschließt.

Auf diese Weise kann ein optimierter Kraftangriff der Schaufeln auf die sich zwischen den Schaufelendbereichen und dem Gehäuse ausbildende Glasbruchschicht vollzogen werden, indem eine in Richtung des Gehäuses weisende Kraftkomponente in diese Glasbruchschicht eingebracht wird.

Den kennzeichnenden Merkmalen des Anspruchs 3 zufolge sind die Schaufeln an der Welle drehbar gelagert. Durch diese Maßnahme kann der Anstellwinkel der Schaufeln gegen die Seitenwände bzw. den Boden des Gehäuses beliebig variiert werden, um die Reibung im Glasbruch je nach Erfordernis zu erhöhen oder zu verringern. Gleichzeitig kann damit die Weiterbeförderung des Glasbruchs in axialer Richtung beschleunigt oder verlangsamt werden.

Entsprechend den kennzeichnenden Merkmalen des Anspruchs 4 sind die Schaufeln in ihrem Mindestabstand zu den Seitenwänden bzw. zum Boden des Gehäuses einstellbar. Durch diese Maßnahme kann ebenfalls dem Materialaufkommen bzw. der Art des Materials durch eine Durchsatzregulation Rechnung getragen werden. Dabei ist sowohl eine verstellbare Neigung der Schaufeln gegen die Wellenachse als auch ein lineares Verfahren von Schaufelteilen in radialer Richtung denkbar.

Gemäß den kennzeichnenden Merkmalen des Anspruchs 5 ist die Welle mittig an Seitenwänden des Gehäuses angeordnet, sodass ein Mindestabstand zumindest an zwei Punkten einer Rotationsbahn der Schaufeln gleich groß ist. Durch diese Anordnung der Welle wird ein effizienter und gleichmäßiger Abrieb am Glasbruch erzielt, da dieser zumindest über einen radialen Abschnitt von 180° der Wellenrotation einer fortwährenden intensiven Druck- und Scherkraft zwischen Schaufeln einerseits und Seitenwänden und Boden des Gehäuses andererseits ausgesetzt ist.

Um eine entsprechend intensive Reibung in das Haufwerk des Glasbruchs einzubringen sind zur Anordnung der Schaufeln an der Welle zwei Gestaltungsvarianten bevorzugt. Dabei mündet die Schnittlinie der Schaufeln mit einer zur Wellenachse normal verlaufenden Ebene entweder gemäß Anspruch 6 tangential oder gemäß Anspruch 7 radial in die Welle. Im letzteren Falle, also bei Schneidung der Schaufelachse mit der Wellenachse in einem Normalwinkel, ist zufolge den kennzeichnenden Merkmalen des Anspruchs 8 der Endbereich einer jeden Schaufel gegenüber dem Rest der jeweiligen Schaufel um einen Winkel β geneigt, um eine bessere Krafteinbringung in den Glasbruch zu ermöglichen.

Die kennzeichnenden Merkmales des Anspruchs 9, demnach die Schaufeln entlang der Wellenachse gewindeförmig versetzt zueinander angeordnet sind, ermöglichen einen kontinuierlichen Weitertransport des Glasbruches in axialer Richtung zur Austrittsöffnung.

Zufolge der kennzeichnenden Merkmale des Anspruchs 11 geht zumindest eine Seitenwand, vorzugsweise jede Seitenwand des Gehäuses über mindestens eine, vorzugsweise über zwei Kanten in den Boden über, wobei die abgekanteten Gehäuseflächen jeweils einen stumpfen Winkel zueinander einschließen. Durch solcherarte Abkantung der Gehäusewandungen erfährt die sich im Zuge der Wellenrotation ausbildende Glasbruchschicht eine Variation in ihrer Homogenität. Sie kann sich am durch die winkelig aufeinanderstoßenden Gehäusewandungen ausgebildeten Keilspalt kurzfristig etwas ausdehnen und wird wieder zusammengestaucht. Wie sich in praktischen Versuchen erwiesen hat, kommt dadurch eine sehr günstige Umwälzung des Glasbruchs zustande. Indem die Glasbruchschicht quasi "pulsiert", wird ein stark wechselnder Abrieb von aneinander scheuernden Glasscherben erzielt und ineinander verzahnte Glasbruchstücke können sich wieder voneinander lösen und erhalten eine neue Position im Rotationsprozess. Fertigungstechnisch können solcherart abgekantete Gehäusewandungen mittels einer Biegevorrichtung oder im Guss realisiert werden. Auch eine Schweißkonstruktion unter Zusammenfügung mehrerer separater Platten zu einem entsprechenden Gehäuse ist möglich.

In Hinblick auf das erfindungsgemäße , Verwendung der Vorrichtung ist es von eminenter Wichtigkeit, dass die mit den Schaufeln versehene Welle nicht zu schnell angetrieben wird, sondern stets eine eine kontinuierliche, fortwährend scherende Umwälzung und einen gründlichen Abrieb der Altglas- bzw. Glasbruchschicht ermöglicht. Hierbei ist es gemäß den kennzeichnenden Merkmalen des Anspruchs 12 vorgesehen, dass die rotierend antreibbare Welle eine bevorzugte Wellendrehzahl von 10 bis 50 U/min aufweist.

### KURZE BESCHREIBUNG DER FIGUREN

Die Erfindung wird nun anhand eines Ausführungsbeispiels näher erläutert. Dabei zeigt:
- Fig.1: eine Explosionsdarstellung einer Vorrichtung zur Trockenwäsche von Altglas
- Fig.2: eine Schnittdarstellung der Vorrichtung aus Fig.1 entlang ihrer Längsachse
- Fig.3: eine schematische Darstellung einer Anordnung von Schaufeln
- Fig.4: eine schematische Darstellung einer Anordnung von Schaufeln

### WEGE ZUR AUSFÜHRUNG DER ERFINDUNG

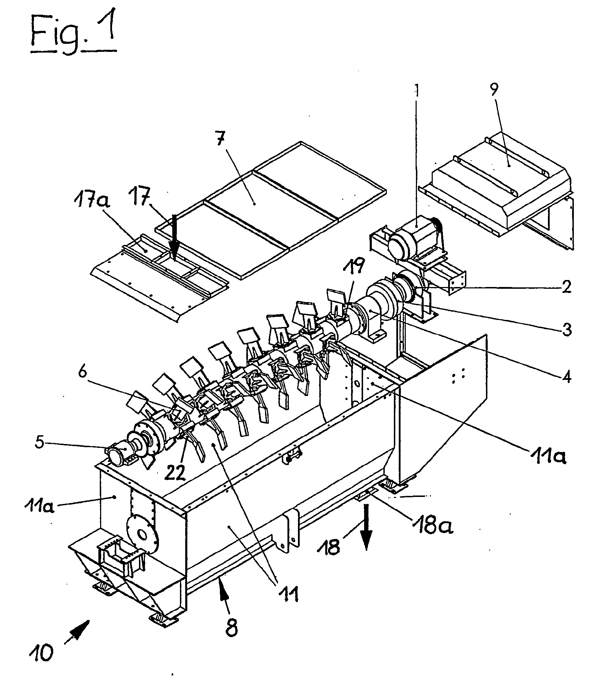

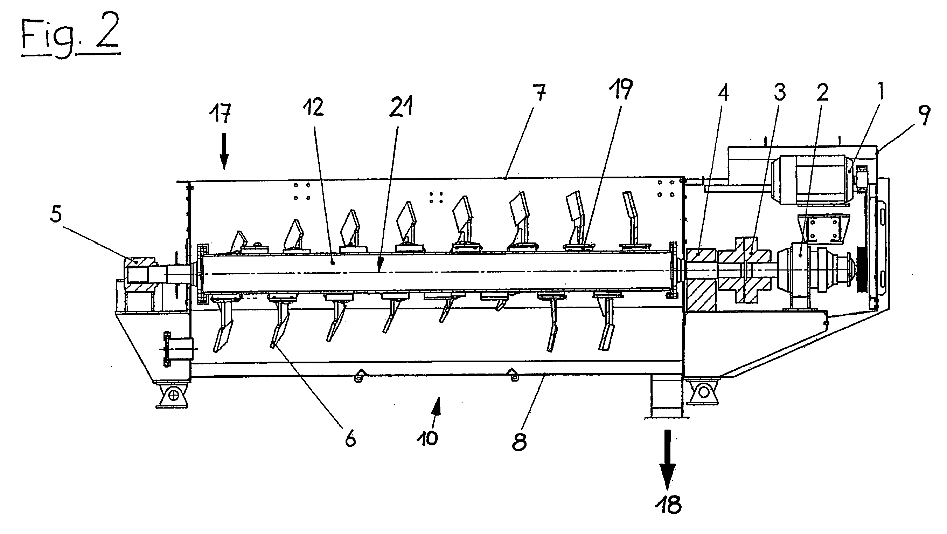

In Fig.1 und Fig. 2 ist eine Vorrichtung die zur Trockenwäsche von Altglas bzw. Glasbruch erfindungsgemäß eingesetzt wird, dargestellt und umfasst einen Antrieb 1, eine Welle 12 mit eine Rotationsbahn 14 aufweisende Schaufeln 6, ein Gehäuse 10, sowie eine Kupplung 3 und ein Getriebe 2. Das Gehäuse 10 umfasst dabei Seitenwände 11 und Stirnwände 11a, einen Boden 8, sowie eine Wellenabdeckung 7 und eine Antriebsabdeckung 9.

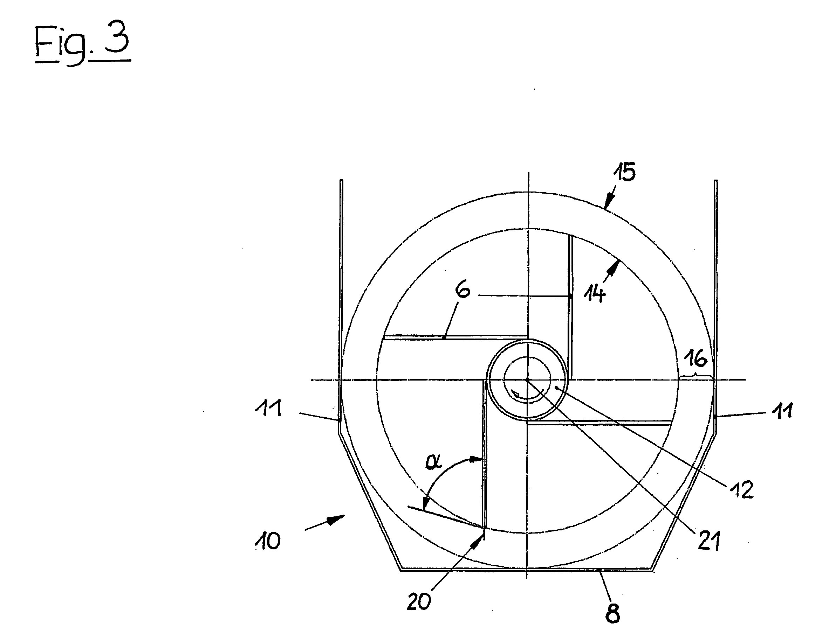

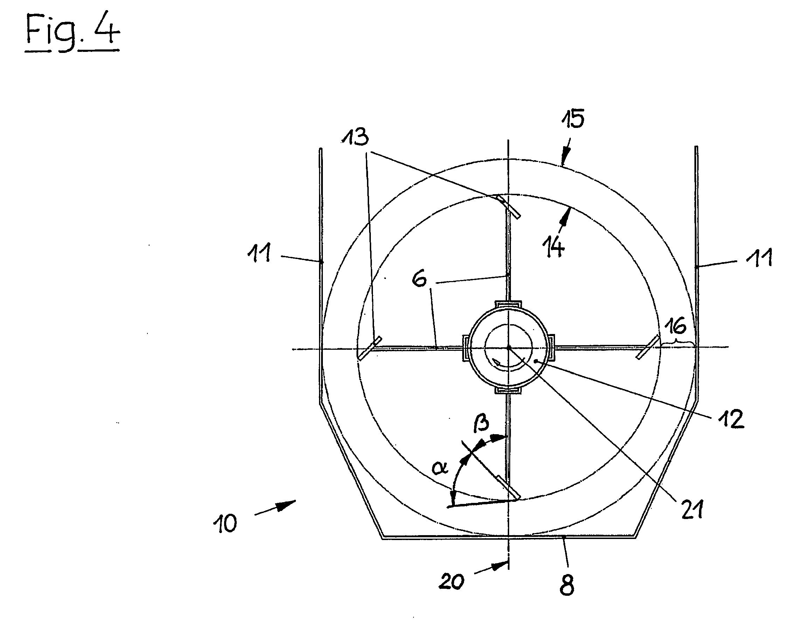

Im Gehäuse 10 ist lediglich eine einzelne Welle 12 mit Schaufeln 6 vorgesehen, wobei die Rotationsbahn 14 der Schaufeln 6 gemäß Fig.3 bzw. 4 einen festgelegten Mindestabstand 16 zu den Seitenwänden 11 und dem Boden 8 des Gehäuses 10 aufweist, welcher mindestens 3 cm, vorzugsweise jedoch 5 cm beträgt. Die Welle 12 ist dabei mittig an den Stirnwänden 11a angeordnet und an ihren axialen Endbereichen in ein Hauptlager 4 und ein Endlager 5 eingepasst. Die Rotationsgeschwindigkeit der Welle 12 kann über den Antrieb 1 samt Kupplung 3 und Getriebe 2 je nach den Erfordernissen hinsichtlich Größe und Menge des ins Gehäuse 10 eingebrachten Glasbruches variiert werden.

Die Anlage wird am Eintritt 17 über eine Eintrittsöffnung 17a mit Altglas bzw. Glasbruch beschickt, welche nach Prozessdurchlauf am Austritt 18 über eine Austrittöffnung 18a das Gehäuse 10 wieder gereinigt verlassen. Selbstverständlich können Eintrittsöffnung 17a und Austrittöffnung 18a auch mehrteilig ausgeführt sein.

Wie Fig.3 bzw. 4 zeigen, wird durch die Anordnung der Endbereiche der Schaufeln 6 in einem Mindestabstand 16 zum Gehäuse 10 während der Wellenrotation die Ausbildung eines mantelförmigen Materialpolsters zwischen den Schaufelendbereichen und den Gehäusewänden erzielt. Durch entsprechende Ausgestaltung der Seitenwände 11 und des Bodens 8 des Gehäuses 10 können diese in ihrer Form einem dem Gehäuse 10 eingeschrieben Inkreis 15 weitgehend angenähert werden, sodass der Glasbruch während des Rotationsvorganges zumindest über einen Abschnitt von 180° der Wellenrotation einen gleichmäßigen, intensiven Abrieb zwischen Schaufeln 6 und Seitenwänden 11 bzw. Boden 8 des Gehäuses 10 einerseits sowie durch die einzelnen Glasscherben untereinander andererseits erfährt.

Hierbei ist es von besonderer Wichtigkeit, dass die Welle 12 mit einer dem Bruchglasmaterialstrom angemessenen Geschwindigkeit, also nicht zu schnell angetrieben wird. Obwohl die Durchsatzmenge der Anlage im Bedarfsfall durch Erhöhung der Wellendrehzahl in gewissem Rahmen gesteigert werden kann, so empfiehlt sich zur Gewährleistung eines gründlichen Abriebs des Bruchglasmaterialstroms eine Wellendrehzahl < 100 U/min, bevorzugt eine Wellendrehzahl von 10 bis 50 U/min. Ein zu rasanter Transport der Altglas- bzw. Glasbruchschicht könnte die erfindungsgemäß angestrebte, kontinuierliche Umwälzung der fortwährend aneinander und an den Schaufeln 6 bzw. dem Gehäuse 10 scheuernden und scherenden Bruchglaselemente verhindern.

Erprobungen in der Praxis haben gezeigt, dass unter bewusster Vorsehung von zwei Kanten, an welchen die Gehäusewand 11 über stumpfe Winkel in den Boden 8 übergeht, eine besonders günstige Umwälzung des Glasbruchs zustande kommt, da die Glasbruchschicht in ihrem Stauchungsgrad eine Variation erfährt. Im Bereich des Zusammentreffens zweier Gehäusewandflächen bildet sich ein Keilspalt aus, in welchen sich der Glasbruch während seines Umwälzungsprozesses kurzfristig etwas ausdehnen kann.

Indem also ein Abrieb des Glasbruchs zwischen Schaufeln 6 und Gehäuse 10 stattfindet, gestaltet sich der Reinigungsprozess viel ökonomischer und gründlicher als bei Anlagen nach dem Stand der Technik und ist darüber hinaus auch in der Lage, im angelieferten Altglasbruch immer wieder auftretende sperrige metallische Gegenstände zum Austritt 18, zu befördern, ohne für diese unerwünschten Gegenstände eine Einhakmöglichkeit durch der Bewegungsrichtung gegenläufige Maschinenteile zu bieten, welche zu einem Blockieren der Anlage führen können.

Fig.3 und Fig.4 zeigen jeweils unterschiedliche Gestaltungsvarianten bei der Anordnung der Schaufeln 6 an der Welle 12. Bei diesen Darstellungen handelt es sich jeweils um Axialschnitte, bei denen zur Verdeutlichung der Schaufelgeometrie auf die perspektivische Darstellung der in dieser Ansicht weiter hinten an der Welle versetzt angeordneten Schaufelreihen verzichtet wurde. Des weiteren werden in dieser Ansicht nur die Schnittlinien der Schaufeln mit der Schnittebene normal zur Wellenachse gezeichnet.

Die durch die Vorrichtung angestrebte intensive Reibung des Glasbruches an Seitenwänden 11 und Boden 8 des Gehäuses 10 wird gemäß Fig.3 durch eine außermittige Anordnung der Schaufeln 6 an der Welle 12 erzielt. Dabei mündet die Schnittlinie der Schaufeln 6 mit einer zur Wellenachse 21 normal verlaufenden Ebene tangential in die Welle 12. Die Schaufeln 6 weisen jeweils einen flächenartigen Endbereich auf, welcher mit einer gedachten Tangente an die Rotationsbahn 14 des jeweiligen Endbereichs einen Winkel α < 90° einschließt.

Eine andere Gestaltungsvariante zeigt Fig.4, wo die Schnittlinie der Schaufeln 6 mit einer zur Wellenachse 21 normal verlaufenden Ebene radial in die Welle 12 mündet. In dieser Ausführung ist der Endbereich einer jeden Schaufel 6 gegenüber dem Rest der jeweiligen Schaufel 6 um einen Winkel β geneigt, um so eine bessere Krafteinbringung in den Glasbruch zu ermöglichen. Fertigungstechnisch ist dies beispielsweise durch ein Anschweißen von separaten Schaufelelementen 13 an den Schaufelendbereich (so dargestellt) oder durch schlichtes Umbiegen der Endbereiche der Schaufeln 6 mittels einer entsprechenden Biegevorrichtung zu realisieren. Wiederum schließen die äußeren Endbereiche der Schaufeln 6 mit einer gedachten- Tangente an die Rotationsbahn 14 einen Winkel α < 90° ein.

Während des Trockenwaschvorganges wird der Glasbruch zusätzlich zu seiner aufgrund der Schaufelbewegung stattfindenden Axialbewegung durch die solcherart ausgestalteten Schaufeln 6 auch gegen die Seitenwände 11 und den Boden 8 des Gehäuses 10 verdrängt und erfährt dort bzw. durch die wechselnd an ihn gepressten benachbarten Glasbruchstücke einen fortwährenden Abrieb.

Die Stellung der Schaufeln 6 in ihrer Anstellung gegen die Seitenwände 11 bzw. gegen den Boden 8 kann dabei mittels einer vorzugsweise als Drehgelenk ausgestalteten Anstellvorrichtung 19 variabel eingestellt werden, sodass eine gezielte Erhöhung oder Verringerung der Reibung im Glasbruch eingeleitet werden kann. Die Vorwärtsbewegung des Materialstroms kann durch diese Maßnahme ebenfalls forciert oder unterdrückt werden.

Im Ausführungsbeispiel nicht dargestellt, jedoch ebenfalls möglich ist es, die Schaufeln 6 in ihrem Mindestabstand 16 zu den Seitenwänden 11 bzw. zum Boden 8 des Gehäuses 10 mittels verstellbarer Neigung der Schaufelachse 20 zur Wellenachse 21 oder mittels linearem Verfahren von Schaufelteilen in radialer Richtung zu variieren.

Um der während des Materialdurchlaufs auftretenden Druck- und Biegebeanspruchung besser standhalten zu können, sind gemäß Fig.1 Versteifungsrippen 22 vorgesehen, welche in einer Normalebene zur Schaufelfläche angeordnet sind und in ihrer Verstrebung zur Welle 12 hin verlaufen.

Die Vorrichtung versteht sich zwar als Trockenwaschanlage, lässt jedoch eine gewisse Naturfeuchte des eingebrachten Glasbruches unbeschadet zu.

## Patentansprüche

1. Verwendung einer Vorrichtung mit in einem Gehäuse (10) rotierbaren Schaufeln (6), die an lediglich einer einzelnen rotierend antreibbaren Welle (12) angeordnet sind und wobei die Endbereiche der Schaufeln (6) in einem Mindestabstand (16) zum Gehäuse (10) enden, um im befüllten Zustand des Gehäuses (10) die Ausbildung einer zufolge der Wellenrotation fortwährend mittels radialer Kraftkomponenten druckbeaufschlagten Altglas- bzw. Glasbruchschicht zwischen den Endbereichen der Schaufeln (6) und Seitenwänden (11) des Gehäuses (10) sowie einem Boden (8) des Gehäuses (10) zu ermöglichen, zur Trockenwäsche von Altglas bzw. Glasbruch mit scherender Durchmischung und Abrasion des Altglases bzw. Glasbruches aufgrund von durch die Schaufelrotation ausgeübten Scher- und Druckkräften.

2. Verwendung einer Vorrichtung gemäß Anspruch 1, wobei die Schaufeln (6) jeweils einen flächenartigen Endbereich aufweisen, dessen Schnittlinie mit einer zur Wellenachse (21) normal verlaufenden Ebene mit einer gedachten Tangente in dieser Ebene an die Rotationsbahn (14) des jeweiligen Endbereichs einen Winkel α < 90° einschließt, zur Trockenwäsche von Altglas bzw. Glasbruch.

3. Verwendung einer Vorrichtung gemäß Anspruch 1 oder 2, wobei die Schaufeln (6) zur Veränderung ihres Anstellwinkels gegen die Seitenwände (11) bzw. den Boden (8) des Gehäuses (10) an der Welle (12) drehbar gelagert sind, zur Trockenwäsche von Altglas bzw. Glasbruch.

4. Verwendung einer Vorrichtung gemäß einem der Ansprüche 1 bis 3, wobei die Schaufeln (6) in ihrem Mindestabstand (16) zu den Seitenwänden (11) bzw. zum Boden (8) des Gehäuses (10) einstellbar sind, zur Trockenwäsche von Altglas bzw. Glasbruch.

5. Verwendung einer Vorrichtung gemäß einem der Ansprüche 1 bis 4, wobei die Welle (12) im wesentlichen mittig an Stirnwänden (11a) des Gehäuses (10) angeordnet ist und der Mindestabstand (16) der Endbereiche der Schaufeln (6) zum Gehäuse (10) zumindest an zwei Punkten der Rotationsbahn (14) gleich groß ist, zur Trockenwäsche von Altglas bzw. Glasbruch.

6. Verwendung einer Vorrichtung gemäß einem der Ansprüche 1 bis 5, wobei die Schnittlinie der Schaufeln (6) mit einer zur Wellenachse (21) normal verlaufenden Ebene tangential in die Welle (12) mündet, zur Trockenwäsche von Altglas bzw. Glasbruch.

7. Verwendung einer Vorrichtung gemäß einem der Ansprüche 1 bis 5, wobei die Schnittlinie der Schaufeln (6) mit einer zur Wellenachse (21) normal verlaufenden Ebene radial in die Welle (12) mündet, zur Trockenwäsche von Altglas bzw. Glasbruch.

8. Verwendung einer Vorrichtung gemäß Anspruch 7, wobei der Endbereich einer jeden Schaufel (6) gegenüber dem Rest der jeweiligen Schaufel um einen Winkel β geneigt ist, zur Trockenwäsche von Altglas bzw. Glasbruch.

9. Verwendung einer Vorrichtung gemäß einem der Ansprüche 1 bis 8, wobei die Schaufeln (6) auf einer entlang der Oberfläche der Welle (12) gewindeförmige verlaufenden Linie angeordnet sind, zur Trockenwäsche von Altglas bzw. Glasbruch.

10. Verwendung einer Vorrichtung gemäß einem der Ansprüche 1 bis 9, wobei der Mindestabstand (16) 3 cm beträgt, vorzugsweise jedoch 5 cm, zur Trockenwäsche von Altglas bzw. Glasbruch.

11. Verwendung einer Vorrichtung gemäß einem der Ansprüche 1 bis 10, wobei zumindest eine Seitenwand (11), vorzugsweise jede Seitenwand (11) des Gehäuses (10) über mindestens eine, vorzugsweise über zwei Kanten in den Boden (8) übergeht und die einzelnen Gehäuseflächen jeweils einen stumpfen Winkel zueinander einschließen, zur Trockenwäsche von Altglas bzw. Glasbruch.

12. Verwendung einer Vorrichtung nach einem der Ansprüche 1 bis 11, wobei die rotierend antreibbare Welle (12) eine Wellendrehzahl von 10 bis 50 U/min aufweist, zur Trockenwäsche von Altglas bzw. Glasbruch.

## Claims

1. The use of an apparatus, comprising scoops (6) which are rotatable in a housing (10) and which are arranged on merely one single rotatably driven shaft (12), with the end sections of the scoops (6) ending at a minimum distance (16) from the housing (10) in order to enable, in the filled state of the housing (10), the formation of a waste glass or cullet layer between the end sections of the scoops (6) and the side walls (11) of the housing (10) as well as a floor (8) of the housing (10), which layer is continuously pressurized as a result of the shaft rotation by means of radial force components, for the dry washing of waste glass or cullet with shearing thorough mixture and abrasion of the waste glass or cullet as a result of shearing and pressure forces exerted by the rotation of the scoops.

2. The use of an apparatus according to claim 1, wherein the scoops (6) each have a planar end section whose line of intersection encloses an angle α < 90° with a plane extending normal to the shaft axis (21) with an imaginary tangent in said plane on the orbit (14) of the respective end section, for the dry washing of waste glass or cullet.

3. The use of an apparatus according to claim 1 or 2, wherein the scoops (6) are rotatably held on the shaft (12) for changing their angle of attack against the side walls (11) or the floor (8) of the housing (10), for the dry washing of waste glass or cullet.

4. The use of an apparatus according to one of the claims 1 to 3, wherein the scoops (6) are adjustable in their minimum distance (16) to the side walls (11) or to the floor (8) of the housing (10), for the dry washing of waste glass or cullet.

5. The use of an apparatus according to one of the claims 1 to 4, wherein the shaft (12) is arranged in a substantially central way on the face walls (11a) of the housing (10) and the minimum distance (16) of the end sections of the scoops (6) to the housing (10) is of the same size at least at two points of the orbit (14), for the dry washing of waste glass or cullet.

6. The use of an apparatus according to one of the claims 1 to 5, wherein the line of intersection of the scoops (6) with a plane extending normal to the shaft axis (21) opens tangentially into the shaft (12), for the dry washing of waste glass or cullet.

7. The use of an apparatus according to one of the claims 1 to 5, wherein the line of intersection of the scoops (6) with a plane extending normal to the shaft axis (21) opens radially into the shaft (12), for the dry washing of waste glass or cullet.

8. The use of an apparatus according to claim 7, wherein the end section of each scoop (6) is inclined about an angle β relative to the rest of the respective scoop, for the dry washing of waste glass or cullet.

9. The use of an apparatus according to one of the claims 1 to 8, wherein the scoops (6) are arranged on a line extending in a thread-like manner along the surface of the shaft (12), for the dry washing of waste glass or cullet.

10. The use of an apparatus according to one of the claims 1 to 9, wherein the minimum distance (16) is 3 cm, preferably 5 cm, for the dry washing of waste glass or cullet.

11. The use of an apparatus according to one of the claims 1 to 10, wherein at least one side wall (11), preferably each side wall (11), of the housing (10) converges via at least one edge, preferably two edges, into the floor (8), and the individual housing surfaces each enclose an obtuse angle with respect to each other, for the dry washing of waste glass or cullet.

12. The use of an apparatus according to one of the claims 1 to 11, wherein the rotatably drivable shaft (12) has a shaft speed of 10 to 50 rpm, for the dry washing of waste glass or cullet.

## Revendications

1. Utilisation d'un dispositif avec des aubes (6) pouvant tourner dans un carter (10), qui sont disposées seulement sur un seul arbre (12) pouvant être entraîné en rotation, dans laquelle les parties d'extrémité des aubes (6) se terminent à une distance minimum (16) du carter (10) afin de permettre, quand le carter (10) est rempli, la formation entre les parties d'extrémité des aubes (6) et des parois latérales (11) du carter (10) ainsi qu'un fond (8) du carter (10) d'une couche de verre usagé ou de débris de verre soumise à une contrainte de compression continue au moyen de composantes radiales de la force à la suite de la rotation de l'arbre, pour le nettoyage à sec de verre usagé ou de débris de verre avec un brassage en cisaillement et une abrasion du verre usagé ou des débris de verre sous l'effet des forces de cisaillement et de compression exercées par la rotation des aubes.

2. Utilisation d'un dispositif selon la revendication 1, dans laquelle les aubes (6) présentent chacune une partie d'extrémité plate dont la ligne d'intersection avec un plan perpendiculaire à l'axe de l'arbre (21) forme avec une tangente imaginaire de ce plan sur la trajectoire de rotation (14) de la partie d'extrémité en question un angle α < 90°, pour le nettoyage à sec de verre usagé ou de débris de verre.

3. Utilisation d'un dispositif selon la revendication 1 ou 2, dans laquelle les aubes (6) sont supportées sur l'arbre (12) avec possibilité de rotation en vue de la modification de leur angle d'application contre les parois latérales (11) ou le fond (8) du carter (10), pour le nettoyage à sec de verre usagé ou de débris de verre.

4. Utilisation d'un dispositif selon l'une des revendications 1 à 3, dans laquelle la distance minimum (16) des aubes (6) par rapport aux parois latérales (11) ou au fond (8) du carter (10) est réglable, pour le nettoyage à sec de verre usagé ou de débris de verre.

5. Utilisation d'un dispositif selon l'une des revendications 1 à 4, dans laquelle l'arbre (12) est disposé sensiblement au milieu sur les parois d'extrémité (11a) du carter (10) et la distance minimum (16) entre les parties d'extrémité des aubes (6) et le carter (10) est égale à la trajectoire de rotation (14) au moins en deux points, pour le nettoyage à sec de verre usagé ou de débris de verre.

6. Utilisation d'un dispositif selon l'une des revendications 1 à 5, dans laquelle la ligne d'intersection des aubes (6) avec un plan perpendiculaire à l'axe de l'arbre (21) est tangente au niveau de l'arbre (12), pour le nettoyage à sec de verre usagé ou de débris de verre.

7. Utilisation d'un dispositif selon l'une des revendications 1 à 5, dans lequel la ligne d'intersection des aubes (6) avec un plan perpendiculaire à l'axe de l'arbre (21) est radiale au niveau de l'arbre (12), pour le nettoyage à sec de verre usagé ou de débris de verre.

8. Utilisation d'un dispositif selon la revendication 7, dans lequel la partie d'extrémité de chaque aube (6) est inclinée par rapport au reste de l'aube correspondante selon un angle β, pour le nettoyage à sec de verre usagé ou de débris de verre.

9. Utilisation d'un dispositif selon l'une des revendications 1 à 8, dans laquelle les aubes (6) sont disposées sur une ligne formant une spirale le long de la surface de l'arbre (12), pour le nettoyage à sec de verre usagé ou de débris de verre.

10. Utilisation d'un dispositif selon l'une des revendications 1 à 9, dans laquelle la distance minimum (16) est de 3 cm, mais de préférence de 5 cm, pour le nettoyage à sec de verre usagé ou de débris de verre.

11. Utilisation d'un dispositif selon l'une des revendications 1 à 10, dans laquelle au moins une paroi latérale (11), et de préférence chaque paroi latérale (11) du carter (10) est reliée au fond (8) par au moins une, de préférence par deux arêtes et les différentes surfaces du carter forment les unes par rapport aux autres un angle obtus, pour le nettoyage à sec de verre usagé ou de débris de verre.

12. Utilisation d'un dispositif selon l'une des revendications 1 à 11, dans laquelle l'arbre (12) pouvant être entraîné en rotation présente une vitesse de rotation d'arbre de 10 à 50 tours/minute, pour le nettoyage à sec de verre usagé ou de débris de verre.
